Europäisches Patentamt

European Patent Office

Office européen des brevets

(19)

(11) **EP 0 897 153 A1**

(12) **DEMANDE DE BREVET EUROPEEN**

(43) Date de publication:
**17.02.1999 Bulletin 1999/07**

(51) Int Cl.⁶: **G06F 11/34**

(21) Numéro de dépôt: **98402011.5**

(22) Date de dépôt: **06.08.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **14.08.1997 FR 9710373**

(71) Demandeur: **BULL S.A.**
**78430 Louveciennes (FR)**

(72) Inventeur: **Rogier, Pierre**
**38000 Grenoble (FR)**

(54) **Procédé de détermination du temps de démarrage d'un système informatique**

(57)　Dans un système informatique, on mesure le temps de démarrage ($T_j$) du système (S) pour des configurations (j) et on détermine des paramètres relatifs à la quantité maximale (n) de différents types de matériel à partir des mesures faites sur le système, de façon à pouvoir déduire, par le calcul et à partir d'une formule contenant les paramètres, le temps de démarrage ($T_q$) relatif à une configuration quelconque (q) du système informatique (S).

FIG. 5

EP 0 897 153 A1

## Description

### Domaine technique

L'invention concerne un procédé de détermination du temps de démarrage d'un système informatique. Ce système informatique peut être de toute taille, micro, mini, ou grand système. Il est constitué par un matériel central et périphérique. Nous utiliserons, à des fins de simplification, le terme matériel en lieu et place de matériel central et périphérique. L'invention est plus particulièrement adaptée aux systèmes informatiques équipés d'un système d'exploitation dont le démarrage s'effectue de façon séquentielle. L'invention s'applique aussi bien aux systèmes monoprocesseurs qu'aux systèmes multiprocesseurs. Elle s'applique notamment aux systèmes multinodaux multiprocesseurs dont les noeuds sont équipés d'un système d'exploitation dont le démarrage, ou tout au moins des phases du démarrage, s'effectue de façon séquentielle. Elle s'applique notamment à un système à architecture redondante basée sur la haute disponibilité des données.
L'invention a aussi pour objets corollaires un système informatique mettant en oeuvre le procédé et un support d'enregistrement pour le stockage du logiciel sujet de l'invention.

### L'art antérieur

Un système informatique ne fonctionne pas généralement de façon ininterrompue. Il connaît des arrêts volontaires et involontaires. Les arrêts involontaires sont principalement dus à des pannes. Lorsque le système est remis en marche, on dit qu'il démarre. Plus précisément, lorsque le système repart complètement à partir de zéro, on dit qu'il démarre à froid. Le système peut aussi redémarrer d'une position intermédiaire, que l'on appelle démarrage à chaud, dans le but d'assurer une relance plus rapide et en perdant le minimum de travail déjà accompli. L'invention s'applique aux deux types de démarrage définis précédemment. Dans la suite de la description, on prendra à titre d'illustration un démarrage à froid. Le système subit au démarrage une initialisation. Il recrée complètement l'environnement d'exploitation. La mise sous tension lors du démarrage à froid consiste à appliquer une instruction reçue sous forme d'interruption par le processeur, interruption appelée le plus souvent RESET. Elle y dispose d'un vecteur d'interruption ou séquence de code qui se trouve à une certaine adresse en mémoire centrale. On trouve généralement à cette adresse une instruction de branchement vers la séquence de démarrage appelé programme amorce.
Le problème est le temps de démarrage, qui peut être long, du système suite à la mise sous tension. De la mise sous tension jusque la phase finale où un message d'invitation autorise l'utilisation du système, une série de phases successives se déroulent, notamment :

- la phase des tests connus sous le nom de POST (Power On Self Test), ou Auto-test à la mise sous tension, effectués sur le matériel central. Les tests comprennent le test de fonctionnement du processeur, le test des divers contrôleurs (clavier...), et le test des premiers octets de la mémoire RAM. Lors de cette phase, il y a beaucoup d'accès mémoire. Ce temps est fonction à la fois la quantité de mémoire et de la taille de la mémoire ;

- la phase de reconnaissance de matériel et la création d'un arbre du matériel ;

- la phase de mise en forme de cet arbre en un format interprétable par le noyau du système ; et

- la phase de démarrage du noyau et le démarrage du séquenceur de processus qui consiste à exécuter le fichier d'initialisation. L'exécution pouvant être, l'initialisation des gestionnaires de périphériques, des couches de protocole de télécommunication (OSI, TCP-IP...), ou du gestionnaire de groupes de disques. Lors de cette phase, le gestionnaire donne des informations d'état au système d'exploitation, à savoir des indications sur le type de matériel et, notamment, sur ses capacités. Le gestionnaire fournit également une série de routines appelées fonctions du gestionnaire. Les gestionnaires prédéfinis sont installés dans le noyau du système d'exploitation.

Ces accès aux différents matériels ont une durée qui dépend du type de matériel et de la quantité de matériel de ce type. De nombreux facteurs influent sur le temps d'initialisation du gestionnaire, tels que :

- le temps de chargement du code résidant sur le matériel périphérique dits « intelligents » ;

- le temps de positionnement des têtes de lecture ; et

- le temps de synchronisation de certaines cartes réseau avec le réseau.

D'autre part, un matériel peut être connecté à d'autres périphériques appelés sous-périphériques. Ces périphériques mettent un certain temps à détecter la présence de ces sous-périphériques.

Lors du démarrage à froid, le processeur maître sérialise chaque tâche et passe en revue tout le matériel un par un. Chaque type de matériel a une charge plus ou moins importante et a parfois, en fonction de sa quantité, voire de sa taille dans certains cas, pour conséquence de ralentir le temps de démarrage du système.

Le temps de démarrage d'un système dure donc un temps plus ou moins long en fonction de la configuration matérielle du système. On entend par configuration, l'agencement du système informatique, c'est-à-dire sa composition matérielle. Ce temps de démarrage a un impact qui n'est pas sans conséquences sur le taux de disponibilité d'un système. Cela vaut surtout pour un système à architecture redondante, dont le taux de disponibilité est inversement proportionnel au temps de démarrage. Ce temps doit donc être le plus court possible.

Il n'existe pas à l'heure actuelle de moyens rapides de détermination du temps de démarrage d'un système et surtout aucune méthode générale ne permet la détermination du temps de démarrage d'un système. Le seul moyen est d'effectuer les mesures manuellement en laboratoire. Ce type de mesure est coûteux en temps.

De plus, un système informatique est destiné à offrir des services à ses utilisateurs et la qualité de ces services sera d'autant plus appréciée qu'ils seront performants. Par performance, nous entendons dans le cas présent, le temps de démarrage du système.

### Sommaire de l'invention

Un premier but de l'invention est de réaliser une méthode à la fois générale et automatique de détermination du temps de démarrage d'un système informatique.

Un second but est la possibilité d'apprécier l'impact d'une modification éventuelle du matériel constituant le système.

Un troisième but visé est la rapidité d'exécution du procédé de détermination du temps de démarrage du système.

Un quatrième but visé est la simplicité d'utilisation du procédé de détermination du temps de démarrage du système.

Et un cinquième but visé est d'en réduire le coût.

A cet effet, l'invention a pour objet un procédé de détermination du temps de démarrage d'un système informatique, ledit système informatique étant constitué de différents types de matériel, caractérisé en ce qu'il consiste à mesurer le temps de démarrage du système pour des configurations j et à déterminer des paramètres relatifs à la quantité maximale des différents types de matériel à partir des mesures faites sur le système, de façon à pouvoir déduire, par le calcul et à partir d'une formule contenant les paramètres, le temps de démarrage $T_q$ relatif à une configuration quelconque q du système informatique.

Il en résulte un système informatique pour la mise en oeuvre du procédé de l'invention.

Un autre objet de l'invention est un support d'enregistrement tel qu'un CD-ROM pour le stockage du logiciel.

L'invention sera mieux comprise à la lecture de la description qui suit, donnée à titre d'exemple et faite en référence aux dessins annexés.

Dans les dessins:

- la figure 1 représente une vue synoptique de l'architecture d'un système informatique sur lequel peut s'appliquer le procédé conforme à l'invention

- la figure 2 représente un graphe illustrant la variation du temps, pendant le démarrage, en fonction d'une configuration donnée du système ;

- la figure 3 est un algorithme illustrant un mode de réalisation du procédé de détermination du temps de démarrage conforme à l'invention ;

- La figure 4 est un algorithme illustrant une méthode détermination des coûts unitaires en temps $\alpha^i$ conformément à l'invention ;

- La figure 5 est un algorithme illustrant la méthode de calcul du temps de démarrage du système informatique ;

- Les figures 6a, 6b, 6c sont des variantes du procédé de détermination du temps de démarrage ;

- La figure 7 est un algorithme illustrant une autre variante du procédé de détermination du temps de démarrage ;

**Description détaillée d'exemples illustrant l'invention**

Pour simplifier la description, les mêmes éléments illustrés dans les dessins portent les mêmes références.

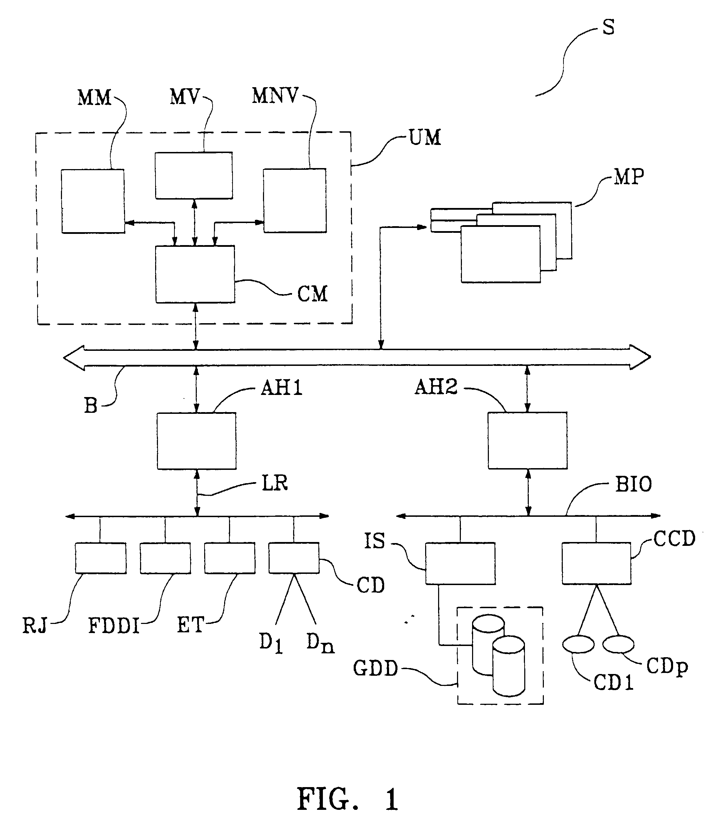

La figure 1 représente un exemple d'un système informatique S sur lequel peut s'appliquer l'invention. Les différents composants matériels représentés sont choisis à titre d'exemple et ne sont en aucun cas limitatifs. Le système S est un système multi-processeur MP mais peut aussi bien s'adapter à un système monoprocesseur. Ce système peut constituer un noeud d'un système multinodal. Parmi ces processeurs MP, on attribue à l'un d'entre eux la tâche de processeur maître. Cet ensemble est relié à un bus B. On a représenté une unité mémoire UM, reliée au bus B comprenant un contrôleur de mémoire CM relié à différents types de mémoires : une première mémoire morte MM de type ROM dans laquelle est stockée un programme amorce exécuté lors du démarrage du système, une deuxième mémoire volatile MV de type RAM dans laquelle est stocké le fichier d'initialisation, et une dernière mémoire non-volatile MNV de type NOVRAM dans laquelle on stocke, entre autre, l'arbre du matériel présent dans le système tel que mentionné dans le préambule de la description.

Le système informatique S est composé de divers matériels. Dans l'exemple illustré, un adaptateur hôte AH1 est relié au bus B vers lequel convergent plusieurs lignes LR d'un réseau. Cet adaptateur AH1 est exploitable à partir de terminaux, par exemple dans le cas de l'interrogation d'une banque de donnée. Cet adaptateur AH1 est relié à différentes cartes de réseaux qui peuvent être, par exemple, du type réseau à jeton RJ , ou du type FDDI (fiber Distributed Data Interface), ou bien du type Ethernet ET. Ce même adaptateur AH1 est, dans l'exemple illustré, relié à un contrôleur de disquettes CD lui même connecté à une quantité m de disquettes D1 à Dm, m pouvant varier suivant les besoins de l'utilisateur. Un autre adaptateur hôte AH2 est présent dans le système S et est relié au bus B. Il est aussi relié à un bus d'entrées-sorties BIO de type SCSI (Small Computer System Interface). Le bus BIO est un matériel de type dit « intelligent » et permet la cohabitation de matériels les plus divers. Dans l'exemple illustré, on a représenté un matériel CD de type CD-ROM muni de son contrôleur CCD. La quantité p de matériel CD peut être variable. Le bus BIO SCSI est relié à un groupe de disques durs GDD par l'intermédiaire d'une interface spécialisée IS de type ESDI (Enhanced Système Device Interface). Cette interface IS a pour fonction la gestion du mécanisme des disques GDD. Ce type de système S est un système classique connu de l'art antérieur.

Le problème est que, pendant toute la durée du démarrage, c'est-à-dire de la mise sous tension jusque la phase finale où un message d'invitation autorise l'utilisation du système, une série de phases successives se déroulent. Cette situation, telle que mentionnée dans l'introduction, provoque un temps de démarrage qui dure un temps plus ou moins long fonction de la configuration matérielle du système.

A cet effet, l'invention propose un procédé de détermination du temps de démarrage d'un système informatique S. Ce système informatique S est constitué de différents types i de matériel. Le procédé consiste à mesurer le temps de démarrage $T_j$ du système pour des configurations j et à déterminer des paramètres relatifs à la quantité maximale des différents types i de matériel à partir des mesures faites sur le système, de façon à pouvoir déduire, par le calcul et à partir d'une formule contenant les paramètres, le temps de démarrage $T_q$ relatif à une configuration quelconque q du système informatique S.

Le procédé de l'invention consiste tout d'abord à définir des paramètres. Le paramètre $P'$ désigne la quantité de matériel d'un même type i. La quantité de matériel $P^0$ de type i=o peut être, par exemple, l'ensemble des disquettes notées D1 à Dm. Le terme « ensemble » (set) est utilisé au sens mathématique. Ainsi de suite, la quantité de matériel $P^1$ de type i=1 peut être l'ensemble des disques de stockage de type CD-ROM CD1 à Cdp, la quantité de matériel $P^2$ de type i=2 peut être l'interface spécialisée IS de type ESDI, etc.

Par définition, le processeur maître effectue chaque tâche séquentiellement. Le procédé de l'invention consiste à utiliser une formule mathématique qui symbolise le temps de démarrage proportionnellement à la quantité de matériel qui compose le système pour des configurations j. Cette formule est de la forme:

$$T_j = \sum_{i=0 \to n} P_j^i \times \alpha^i \qquad \text{(f)}$$

où comme paramètres,

- i est l'indice du matériel d'un type donné.

- j est la quantité de configuration.

4

- $T_j$ est le temps de démarrage du système S pour une configuration j.

- $\alpha^i$ est le coût unitaire en temps propre au matériel de type i.

- $P_j^i$ est la quantité de matériel de type i dans une configuration j.

- n est la quantité de matériel de type différent composant le système S.

Considérons la configuration de type j. $P_j^0$ est la quantité de matériel d'un même type i=0 dans la configuration j. De même $P_j^1$ est la quantité de matériel d'un même type i=1 dans la configuration j et $P_j^n$ la quantité de matériel d'un même type i=n dans la configuration j.

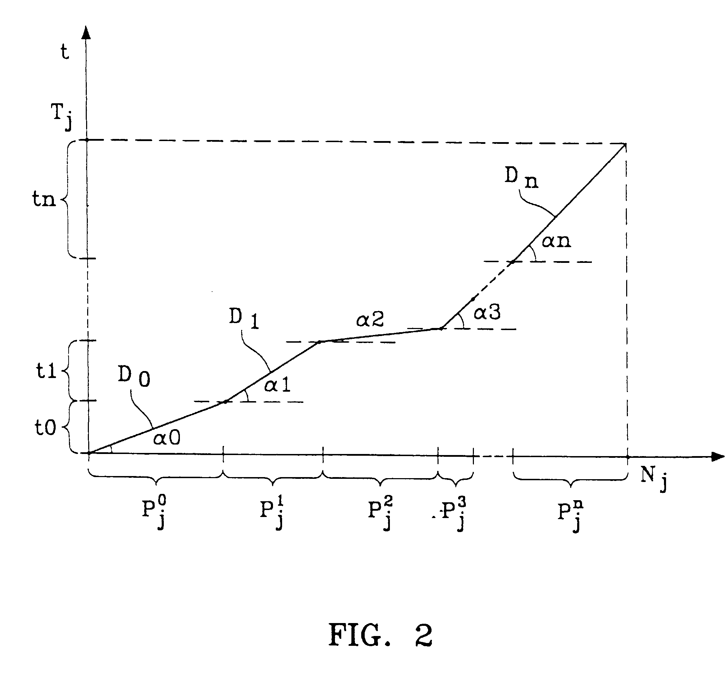

La figure 2 est un graphe illustrant la variation du temps de démarrage du système en fonction d'une configuration j du système. Par définition, le processeur maître effectue chaque tâche successivement. Dans l'exemple illustré, le processeur maître commence par le matériel de type i=0. Chaque matériel de ce type est pris individuellement. Concrètement, chaque disquette D1 à Dm est analysée, pendant le démarrage, individuellement l'une après l'autre. Il en est de même pour le reste du matériel, jusqu'au matériel de type n. Ce graphe met bien en évidence le caractère séquentiel de chaque tâche effectuée par le processeur.

L'axe des abscisses est représentatif de la configuration matérielle du système S et l'axe des ordonnées représente les coûts en temps $t_i$ correspondants. Sur cette figure, à une portion de droite correspond un type i de matériel. A l'instant initial, c'est-à-dire à la mise sous tension, chaque phase du démarrage est effectuée. La variation du temps est linéaire conformément au caractère séquentiel du démarrage. A l'ensemble du matériel de type i=0, on attribue un coût en temps $t_0$. Egalement, on attribue à l'ensemble du matériel de type i=0 une portion de droite linéaire $D_0$. Ainsi de suite, à chaque ensemble de matériel d'un type i donné, on attribue un coût en temps $t_i$. Egalement, on leur attribue une portion de droite $D_i$. Le coût en temps $t_i$ de chaque ensemble de matériel d'un type i se distingue du coût unitaire en temps $\alpha^i$ par le fait que le coût unitaire en temps correspond à un matériel pris individuellement. Par exemple, à chaque disquette Dm, qui est un matériel de type i=0, est associé un coût unitaire en temps $\alpha^0$. De même, $t_1$ est le coût en temps de l'ensemble du matériel de type i=1. Ainsi, à l'ensemble du matériel $P_j^0$ de type i=0 correspond un coût en temps $t_0$, à l'ensemble du matériel $P_j^1$ de type i=1 correspond un coût en temps $t_1$, et ainsi de suite jusqu'au matériel de type i=n, par étape successive.

Le coût unitaire en temps $\alpha^i$ d'un matériel de type i correspond donc au coefficient directeur de cette portion de droite $D_i$. Ce coefficient directeur est constant pour un matériel de même type i. Une autre caractéristique de l'invention consiste à déterminer les paramètres $\alpha^i$ de chaque type i de matériel.

Dans l'exemple illustré, $Nj$ est la quantité totale de matériel constituant le système dans une configuration j. $Nj$ est donc la somme de tout le matériel composant le système dans une configuration j:

$$Nj = \sum_{i=0 \to n} P_j^i$$

$Tj$ est le temps de démarrage calculé du système pour une configuration de type j. Le temps de démarrage du système est $Tj$ et correspond à la somme de tous les coûts en temps ($t_0$ à $t_n$). Plus précisément, *to* est le produit du coût unitaire en temps par le matériel associé de type i=0 ou $\alpha^0 \times P_j^0$.

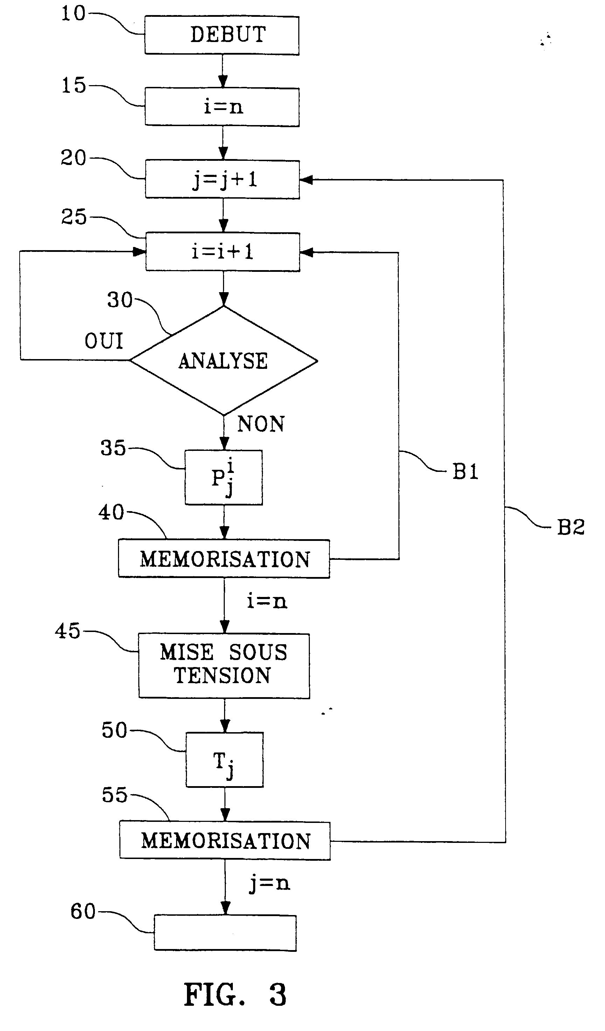

On décrira maintenant, en référence à la figure 3, un algorithme conforme à la présente invention. Cet algorithme se compose de plusieurs étapes. L'étape 10 signifie que l'utilisateur débute cette série d'étapes. A l'étape 15, on définit la quantité maximale n de matériel de type i différent composant le système S et sujet à un démarrage à froid. L'étape 20 désigne une première configuration j=1 parmi n configurations du système S. Une configuration j est de préférence une configuration matérielle existante et réaliste. Lors de cette phase de configuration, on commence par le premier type i=1 de matériel (étape 25) qui va subir une analyse (étape 30). Cette analyse consiste à déterminer si le type de matériel en question est un processeur. En effet, la quantité de processeurs est le seul paramètre ne vérifiant pas la formule (f) définie précédemment. Le temps processeur n'est pas toujours correct et fidèle. Plusieurs passages de la même commande peuvent conduire à des temps différents de traitement par des processeurs différents. Si le matériel de type i est un processeur, on retourne à l'étape 25 pour passer à un matériel d'un autre type. Si celui-ci n'est pas un processeur, on aboutit à l'étape 35. Cette étape consiste à définir la quantité de matériel $P_j^i$ d'un même type i dans une configuration j. On mémorise cette information à l'étape 40. On passe au matériel suivant de type i+1, qui subit le même traitement que son précédent, et ainsi de suite pour former une boucle itérative B1. Cette boucle B1 continue jusqu'à ce que chaque type de matériel ait été analysé.

L'étape de configuration j=1 est arrivée à son terme. On mesure le temps $T_j$ de la configuration j=1. A l'étape 55, on mémorise le temps mesuré. On détermine de la même manière, une autre configuration j+1 du système. Une autre boucle itérative B2 est effectuée. De préférence, on établit des configurations du système S en quantité égale aux différents types i de matériel composant le système. Ainsi, les étapes 20-55 sont une fois de plus répétées jusqu'à ce que la quantité de configuration j soit égale à la quantité n de type i de matériel prédéfinie.

L'étape 60 consiste à entrer toutes les valeurs déterminées dans des tableaux. Un premier tableau comprend par exemple les temps mesurés. Un deuxième tableau comprend la quantité de matériel pour chaque configuration.

De préférence ces tableaux sont des matrices. On définit une première matrice [$T$] unidimensionnelle. Cette matrice représente les temps de démarrage calculés pour chaque configuration j. Une deuxième matrice [$P$] carrée représente la quantité de matériel d'un même type en fonction de la configuration. Chaque ligne de la matrice [$P$] représente, par exemple, une configuration j et chaque colonne la quantité de matériel.

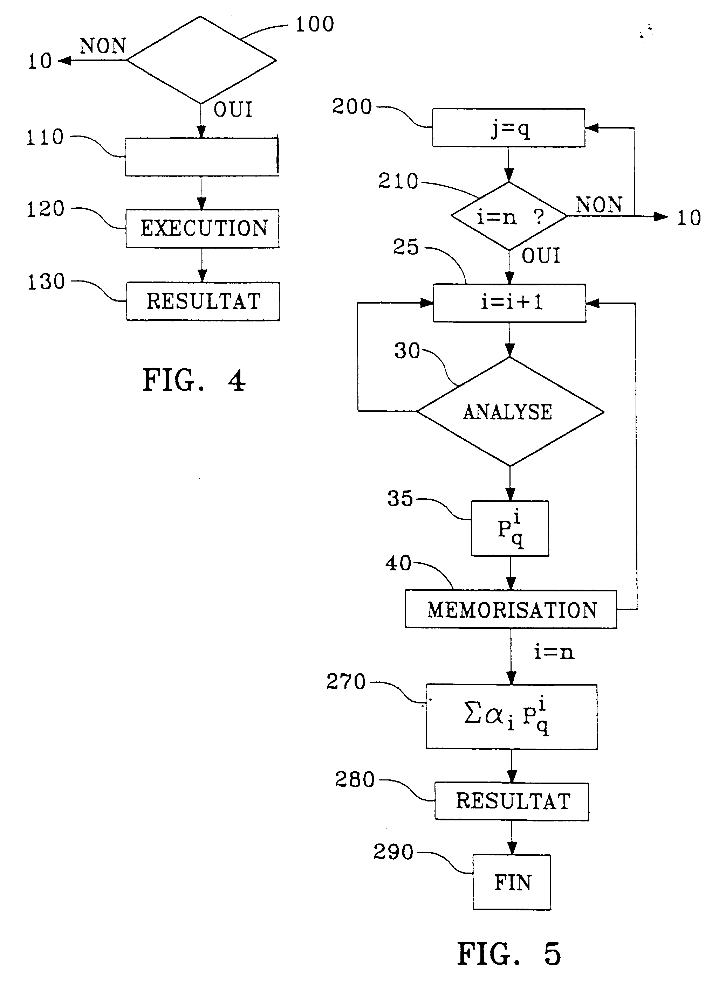

La figure 4 représente un algorithme illustrant la méthode de détermination des coûts en temps $\alpha^i$ de chaque matériel de type i. Par définition, on a la formule (f) définie précédemment.

L'étape 100 consiste à vérifier certaines règles mathématiques concernant l'utilisation des matrices. La matrice [$P$] doit être, entre autre, inversible. Dans le cas contraire, l'utilisateur est invité à revenir à l'étape 10 et redéfinir des configurations de telle sorte que la matrice [$P$] vérifie ces règles mathématiques. Si oui, l'étape 110 consiste à inverser la matrice [$P$]. L'étape 120 exécute le produit [$P$]$^{-1}$ $\times$ [$T$], qui est le produit de la matrice [$T$] par l'inverse de la matrice [$P$], afin de calculer les coûts unitaires en temps de chaque type de matériel à l'étape 130. Les coûts unitaires en temps sont représentés par une matrice notée [$\alpha$]. Dès cet instant, on a déterminé les coûts unitaires en temps $\alpha^i$ de chaque matériel de type i. On est donc capable de détecter les gros consommateurs en temps. Les coûts unitaires en temps permettent de déterminer le type de matériel qui ralentit le plus le démarrage du système. L'utilisateur peut exploiter ces coûts en temps et prendre des mesures pour adopter un configuration avec laquelle le temps de démarrage sera optimal.

La figure 5 est un algorithme illustrant la façon dont on exploite ces résultats pour déterminer le temps de démarrage $T_q$ d'une quelconque configuration ultérieure q choisie par un utilisateur.

On définit une configuration de la même manière que dans les étapes 20 à 40. De préférence, l'utilisateur définit , à l'étape 200, une configuration qu'il souhaite utiliser. La condition d'utilisation de cet algorithme est que la quantité n de types de matériel que l'utilisateur souhaite utilisé soit au plus égal à la quantité maximale de types de matériel qui a servi a obtenir les résultats 50 et 130. C'est l'objet de l'étape 210. Cette dernière étape consiste à s'assurer que la quantité de type de matériel satisfait à la condition précédente. Si ce n'est pas le cas, deux solutions sont proposées. On invite l'utilisateur à redéfinir une configuration q. Dans ce dernier cas, l'utilisateur se retrouve à l'étape 200. Ou bien, une autre solution consiste à inviter l'utilisateur à retourner à l'étape 10 et à recalculer les résultats 50 et 130 qui correspondent à une quantité de type de matériel que l'utilisateur souhaite utiliser. Dans ce dernier cas, l'utilisateur est invité à redéfinir une quantité maximale n de différents types de matériel.

Si la quantité de types de matériel satisfait à la condition de l'étape 210, on effectue les étapes 25 à 40. De cette façon, on obtient une configuration du système informatique S. Une autre caractéristique de l'invention consiste à déduire le temps de démarrage $T_q$ d'une configuration q quelconque choisie ultérieurement du système S. L'étape 270 consiste à effectuer la somme des produits du coût en temps $\alpha^i$, calculé précédemment à l'étape 130 et associé à un matériel d'un type i donné, par la quantité de matériel $P_q^i$ correspondant de type i dans cette configuration q quelconque. La somme de tous ces produits correspond au temps de démarrage $T_q$ de la configuration q établie par l'utilisateur (étape 280). Ce calcul correspond à la formule (f) définie précédemment avec j=q. L'étape 290 constitue la fin du procédé.

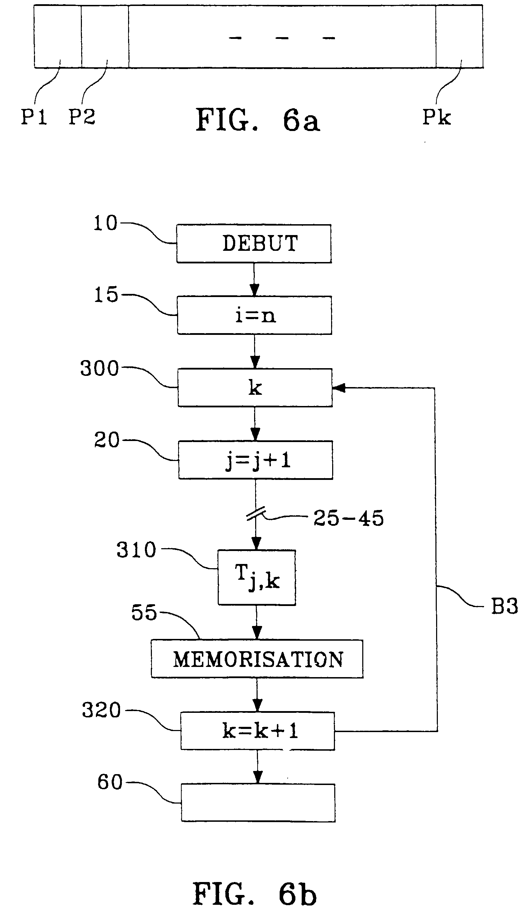

Selon une autre variante de l'invention, les coûts unitaires en temps de chaque type de matériel, au lieu d'être calculé sur l'ensemble du temps de démarrage, peut être décomposé en un certain nombre de coûts unitaires correspondant à des phases du démarrage du système. Sur la figure 6a, on a représenté une décomposition du temps de démarrage en k phases P1 à Pk. La phase P1 peut être par exemple le phase de tests connus sous le nom POST. La phase P2 peut être la phase d'initialisation etc. L'utilisateur choisi au préalable de diviser la phase de démarrage en un certain nombre de phases distinctes. Le procédé, tel qu'appliqué selon les figures 2, 3 et 4 est le même. Cependant, quelques étapes sont à rajouter. L'algorithme de la figure 6b illustre la manière d'opérer.

Les étapes 10 et 15 de la figure 3 restent les mêmes. L'étape 300, qui suit, consiste à décomposer le démarrage en plusieurs phases et à choisir l'une d'entre elles. Ensuite, à l'étape 20, on définit des configurations j du système pour chaque phase. On effectue chaque étape 25-45 de la figure 3. On calcule, à l'étape 310, pour une phase k choisie, le temps $T_{j,k}$ de démarrage de chaque configuration j. La formule est de la forme:

$$T_{j,k} = \sum_{i=0 \to n} P_j^i \times \alpha_k^i \quad \text{(g)}$$

avec:

- $T_{j,k}$ le temps de démarrage de la phase k dans une configuration j;

- k la phase choisie par l'utilisateur ;

- $\alpha_k^i$ le coût unitaire en temps du matériel de type i lors de la phase k.

L'étape 55 qui suit est la même que celle de la figure 3. L'utilisateur est ensuite invité, à titre d'option et s'il le souhaite, à définir la phase k suivante du démarrage sur laquelle portera le calcul du coût unitaire en temps $\alpha_k^i$. Cette étape 320 crée une nouvelle boucle itérative B3. Ainsi, on obtient des tableaux de valeurs ou préférentiellement des matrices telles que définies sur la figure 3. On applique dès lors le principe de l'algorithme de la figure 2 et on obtient le coût unitaire en temps $\alpha_k^i$ de chaque matériel de type i lors de la phase k.

Cette variante permet d'apprécier les impacts d'une modification de matériel pendant une phase que l'utilisateur aura préalablement choisi. $T_{j,k}$ sera le temps de démarrage de la phase k dans une configuration j.

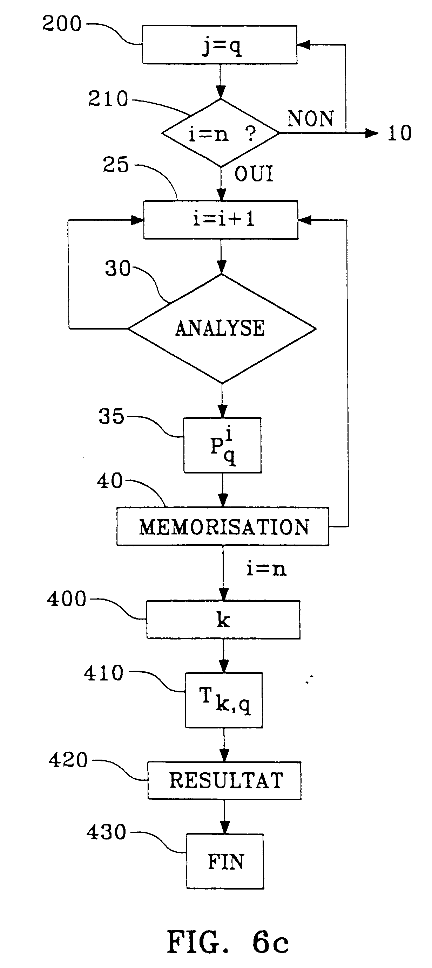

On peut déduire le temps de démarrage $T_{q,k}$ du système, pour chaque phase k, d'une configuration quelconque q choisie ultérieurement du système S en appliquant le procédé conforme à l'invention. La détermination du temps de démarrage $T_{q,k}$ associé à une phase k, relatif à une configuration quelconque q du système se calcul avec la formule (g) avec j=q. Les étapes 200 et 210 ainsi que les étapes 25-40 de la figure 6c sont applicables. On ajoute à la suite de l'étape 40 de la figure 6c une étape 400 dans laquelle l'utilisateur choisit une phase k quelconque. A l'étape 410, on applique la formule (g). Cette étape représente la somme des produits du coût unitaire en temps $\alpha_k^i$ calculé au préalable, du matériel de type i calculé pendant la phase k, phase k que vient de choisir l'utilisateur, par la quantité de matériel $P_q^i$ de type i relatif à la configuration q. A l'étape 420, on obtient le résultat. L'étape 430 signifie la fin du procédé.

De même, on peut en déduire le temps de démarrage du système relatif à la configuration q. Ce dernier est de la forme:

$$T_q = \sum_k T_{q,k}$$

avec : k la quantité de phases que l'utilisateur aura choisi au préalable.

Cette variante est particulièrement adaptée aux systèmes multinodaux multiprocesseurs. En effet, sur de tels systèmes, certaines phases du démarrage s'effectuent séquentiellement. Au contraire, certaines phases s'effectuent en parallèle. L'utilisateur choisit donc au préalable des phases séquentielles. Il peut alors, conformément à l'invention, appliquer le procédé de l'invention à chaque noeud. Il est évident, pour l'homme de l'art, que le temps de démarrage du système S associé à cette phase sera le temps de démarrage maximum calculé parmi tous les temps de démarrage de chaque noeud.

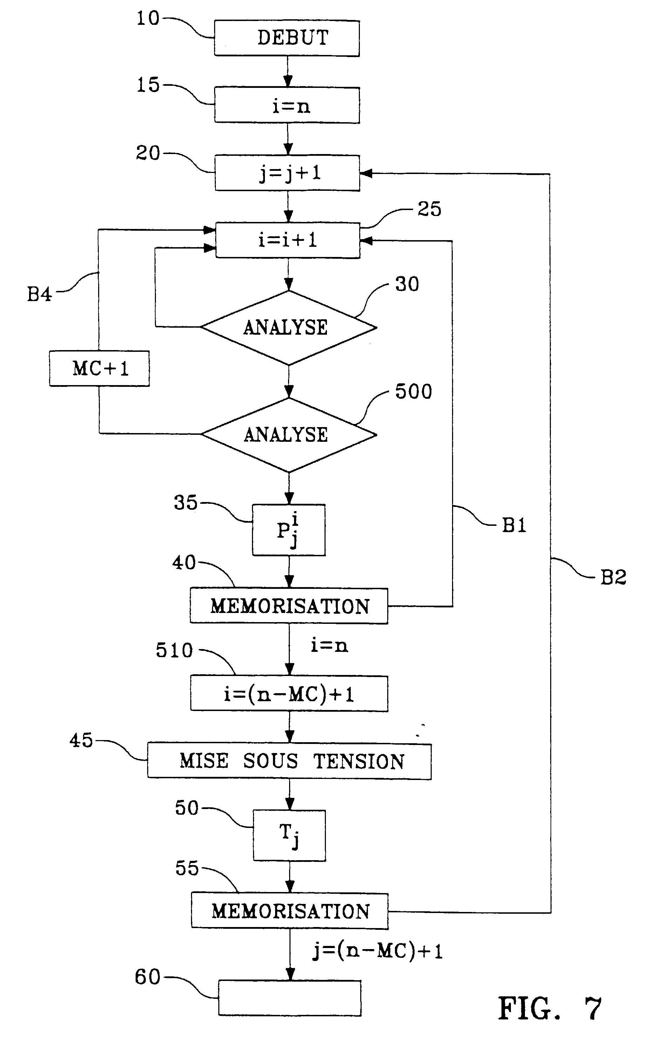

Une autre variante consiste à rassembler dans un même ensemble les types i de matériel qui, tout en étant sujet à un démarrage, ne vont pas varier au cours des différentes configurations j. Dans l'exemple illustré, la quantité de matériel de ce type est notée MC. Plus précisément, ce type de matériel ne varie pas lors des différentes configurations j constituées par la boucle itérative B1 de la figure 3. Le procédé consiste à inclure parmi les types de matériel de la matrice [P] un matériel fictif constitué par tout le matériel dont la quantité reste constante au cours des différentes configurations j du système. A ce matériel fictif est associé un coût unitaire en temps global. Le but envisagé est d'alléger la quantité totale n de matériel dans la matrice et à fortiori la quantité de configuration et donc de réduire la dimension de chaque matrice. A cet effet, l'algorithme est celui de la figure 7. Sur celui-ci, on a modifié l'algorithme de la figure 3. Après l'étape 30 de la figure 3, on procède à une nouvelle analyse, étape 400 de la figure 7, dans laquelle on détermine si un type i de matériel est susceptible de varier au cours des différentes configurations j. Si oui, on passe à l'étape 35 qui suit. Dans le cas contraire, on augmente d'une unité la quantité MC. L'utilisateur est invité à retourner à l'étape 25 pour définir le matériel suivant i+1, ce qui constitue une boucle itérative B4. Une étape 510 est simplement ajoutée dans laquelle on détermine la quantité de matériel dont le nombre est amené à varier au cours des différentes configurations j. De toute évidence, ce nombre est égal à la quantité n relative à la quantité maximale de différents types de matériel à laquelle il faut retrancher la quantité MC correspondant à la quantité de matériel d'un type donné qui restera constant au cours des différentes configurations j. Cette quantité est donc la différence : (n-MC). La dimension de la matrice [P] est donc la différence (n-MC) à laquelle on ajoute une unité. C'est l'objet de l'étape 510. Cette dernière unité symbolise l'ensemble (set) du matériel dont la quantité ne varie pas au cours des différentes configurations j auquel on associe une colonne de la matrice [P]. La quantité MC peut avoir une valeur quelconque du fait de la linéarité de la formule (f). On peut, par exemple, choisir l'unité. Les étapes suivantes sont les étapes 45 à 55 de la figure 3. La boucle itérative B2 est effectuée un nombre de fois égal à la différence (n-MC)+1 pour obtenir une matrice [P] carrée.

D'une manière générale, on peut dire que l'invention a pour objet un procédé de détermination du temps de démarrage d'un système informatique S, le système informatique S étant constitué de différents types i de matériel et le procédé consiste à déterminer le temps de démarrage $T_j$ du système pour des configurations j et à déterminer des paramètres relatifs à la quantité maximale n de différents types de matériel à partir des mesures faites sur le système, de façon à pouvoir déduire, par le calcul et à partir d'une formule contenant les paramètres, le temps de démarrage $T_q$ relatif à une configuration quelconque q du système informatique S.

Du fait du caractère séquentiel de chaque tâche, les illustrations précédentes montrent que les paramètres sont les coûts unitaires en temps $\alpha^i$ de chaque type i de matériel. De préférence, le temps de démarrage $T_j$ dans une configuration j est donné par la formule :

$$T_j = \sum_{i=0 \to n} P_j^i \times \alpha^i \qquad\qquad (f)$$

où :

-   i est l'indice du matériel d'un type donné.

-   j est l'indice de la configuration.

-   $T_j$ est le temps de démarrage du système pour une configuration j.

-   $\alpha^i$ est le coût unitaire en temps propre au matériel de type i.

-   $P_j^i$ est la quantité de matériel de type i dans une configuration j.

-   n est la quantité de matériel de type différent composant le système.

Les exemples illustrés montrent l'intérêt d'utiliser une méthode matricielle pour la détermination des coûts unitaires en temps $\alpha^i$ de chaque type i de matériel. Cette méthode, illustrée à la figure 4, consiste, tout d'abord à former une matrice [P] carrée dont chaque ligne représente une configuration j et les colonnes la quantité des différents types de matériel. Elle consiste ensuite à former une matrice [T] unidimensionnelle comportant les temps $T_j$ mesurés. Et enfin, à calculer le produit de la matrice [T] par l'inverse de la matrice [P]. On a vu aussi que l'on pouvait réduire la dimension des matrices [P] et [T]. Il faut pour cela inclure parmi les types de matériel de la matrice [P] un type de matériel fictif constitué par tout le matériel (MC) dont la quantité reste constante au cours des différentes configurations j.

On a vu, sur les figures 6a, 6b que les coûts unitaires en temps $\alpha^i$ peuvent être décomposés en k coûts unitaires $\alpha_k^i$ correspondant à une phase k du temps de démarrage. Le temps de démarrage $T_{j,k}$ du système associé à une phase k dans une configuration j est, dans ce cas, donné par la formule :

$$T_{j,k} = \sum_{i=0 \to n} P_j^i \times \alpha_k^i \quad (g)$$

avec : $\alpha_k^i$ le coût unitaire en temps du matériel de type i lors de la phase k.

Et enfin on a vu, sur la figure 6, que la détermination du temps de démarrage $T_q$ relatif à une configuration quelconque q du système équivaut à la somme de tous les temps démarrage $T_{q,k}$ relatifs à une configuration quelconque q du système associé à chaque phase k.

L'invention a aussi pour objet corollaires, un système informatique S comprenant au moins un processeur P et un système d'exploitation pour la mise en oeuvre du procédé, et un support d'enregistrement pour le stockage du logiciel sujet de l'invention.

Il ressort des exemples illustrés que l'invention offre de nombreux avantages. Elle permet un calcul du temps de démarrage d'un système informatique à partir d'une formule mathématique générale. De plus, ce calcul du temps de démarrage est entièrement automatique. Elle permet de modéliser le temps de démarrage et d'apprécier les impacts d'une modification de matériel de la mise sous tension jusque la fin du démarrage. L'invention permet au client et au vendeur de connaître l'impact d'une modification de matériel. On a vu aussi que l'on pouvait décomposer ce temps en plusieurs phases. Le client ou le vendeur peut ainsi connaître l'impact d'une modification de matériel pendant une des phases qu'il aura choisi au préalable. Le procédé est simple d'utilisation, en effet l'utilisation du calcul matriciel apporte un certain nombre d'avantage. Le calcul matriciel est disponible sur des outils standards de bureautique comme EXCEL (Marque déposée) donc simple et rapide à mettre en oeuvre. La seule condition est que la matrice soit inversible. Le faible coût de l'invention est aussi un énorme avantage. Elle permet de conserver un modèle simple sans avoir à faire un étude complète d'analyse de donnée coûteuse en temps et en matériel.

## Revendications

1. Procédé de détermination du temps de démarrage d'un système informatique (S), le temps de démarrage se décomposant en plusieurs phases (k), ledit système informatique (S) étant constitué de différents types de matériel, caractérisé en ce qu'il consiste à mesurer le temps de démarrage ($T_j$) du système (S) pour des configurations (j) et à déterminer des paramètres relatifs à la quantité maximale (n) de différents types de matériel à partir des mesures faites sur le système, de façon à pouvoir déduire, par le calcul et à partir d'une formule contenant les paramètres, le temps de démarrage ($T_q$) relatif à une configuration quelconque (q) du système informatique (S).

2. Procédé selon la revendication 1, caractérisé en ce que les paramètres sont les coûts unitaires en temps ($\alpha^i$) de chaque type i de matériel.

3. Procédé selon l'une des revendications 1 ou 2, caractérisé en ce que le temps de démarrage ($T_j$) dans une configuration j est donné par la formule :

$$T_j = \sum_{i=0 \rightarrow n} P_j^i \times \alpha^i \qquad\qquad (f)$$

où :

- i est l'indice du matériel d'un type donné.

- j est l'indice de la configuration.

- $T_j$ est le temps de démarrage du système pour une configuration j.

- $\alpha^i$ est le coût unitaire en temps propre au matériel de type i.

- $P_j^i$ est la quantité de matériel de type i dans une configuration j.

- n est la quantité de matériel de type différent composant le système (S).

4. Procédé selon l'une des revendications 1 à 3, caractérisé en ce que la détermination des coûts unitaires en temps ($\alpha^i$) de chaque type i de matériel consiste à :

a) former une matrice [P] carrée dont chaque ligne représente une configuration j et les colonnes la quantité des différents types de matériel,
b) former une matrice [T] unidimensionnelle comportant les temps $T_j$ mesurés, et
c) à calculer le produit de la matrice [T] par l'inverse de la matrice [P].

5. Procédé selon l'une des revendications 1 à 4, caractérisé en ce qu'il consiste à inclure parmi les types de matériel de la matrice [P] un type de matériel fictif constitué par tout le matériel (MC) dont la quantité reste constante au cours des différentes configurations j.

6. Procédé selon la revendication 2, caractérisé en ce que les coûts unitaires en temps ($\alpha^i$) sont décomposés en k coûts unitaires ($\alpha_k^i$) correspondant à une phase k du temps de démarrage.

**7.** Procédé selon la revendications 6, caractérisé en ce que le temps de démarrage ($T_{j,k}$) du système associé à une phase k dans une configuration j est donné par la formule :

$$T_{j,k} = \sum_{i=0 \to n} P_j^i \times \alpha_k^i \qquad \text{(g)}$$

avec : $\alpha_k^i$ le coût unitaire en temps du matériel de type i lors de la phase k.

**8.** Procédé selon la revendication 7, caractérisé en ce que la détermination du temps de démarrage ($T_q$) relatif à une configuration quelconque q du système (S) équivaut à la somme de tous les temps démarrage ($T_{q,k}$) relatifs à une configuration quelconque q du système associé à chaque phase k.

**9.** Système informatique (S), comprenant au moins un processeur (P) et un système d'exploitation, caractérisé en ce qu'il met en oeuvre le procédé défini par l'une des revendications 1 à 8.

FIG. 1

FIG. 2

FIG. 3

100

NON

10

OUI

110

120 EXECUTION

130 RESULTAT

## FIG. 4

200 $j = q$

210 $i = n$ ? NON → 10

OUI

25 $i = i + 1$

30 ANALYSE

35 $P_q^i$

40 MEMORISATION

$i = n$

270 $\sum \alpha_i P_q^i$

280 RESULTAT

290 FIN

## FIG. 5

FIG. 6a

FIG. 6b

200 — j=q

210 — i=n ? —— NON ——→ 10

25 — OUI

i=i+1

30 — ANALYSE

35 — $P_q^i$

40 — MEMORISATION

i=n

400 — k

410 — $T_{k,q}$

420 — RESULTAT

430 — FIN

## FIG. 6c

**FIG. 7**

**Office européen des brevets**

## RAPPORT DE RECHERCHE EUROPEENNE

Numéro de la demande

EP 98 40 2011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FR 2 668 271 A (DIGITAL EQUIPMENT CORP) 24 avril 1992 <br> * abrégé; revendications 1-5 * <br> * page 23, ligne 5 - ligne 16 * <br> * page 33, ligne 4 - page 34, ligne 4 * | 1,9 | G06F11/34 |
| A | EP 0 372 682 A (DIGITAL EQUIPMENT CORP) 13 juin 1990 <br> * abrégé * <br> * page 5, ligne 5 - ligne 16; revendications * | 1,9 | |
| A | POLLACK R B ET AL: "PREDICTION OF SEARCH ALGORITHM RUNTIMES USING TIME-COMPLEXITY PARAMETERS" <br> INTERNATIONAL CONFERENCE ON SYSTEMS ENGINEERING, FAIRBORN, OHIO, SEPT. 9 - 11, 1987, <br> no. -, 9 septembre 1987, pages 511-515, XP000042247 <br> INSTITUTE OF ELECTRICAL AND ELECTRONICS ENGINEERS <br> * page 512, ligne 7 - page 513, ligne 1 * | 1-3,9 | |
| A | US 4 727 549 A (TULPULE BHALCHANDRA R ET AL) 23 février 1988 <br> * abrégé * | 1,9 | |
| A | "DETECTION OF END OF POST TEST BY MONITORING A SYSTEM MANUFACTURING PORT" <br> IBM TECHNICAL DISCLOSURE BULLETIN, <br> vol. 37, no. 6B, 1 juin 1994, page 657/658 XP000456131 <br> * alinéa 1 * | 1,9 | |

DOMAINES TECHNIQUES RECHERCHES (Int.Cl.6)

G06F

Le présent rapport a été établi pour toutes les revendications

| Lieu de la recherche | Date d'achèvement de la recherche | Examinateur |
|---|---|---|
| LA HAYE | 4 novembre 1998 | Herreman, G |